Europäisches Patentamt

European Patent Office

Office européen des brevets

(19)

(11) Veröffentlichungsnummer: **0 475 377 A2**

## (12) EUROPÄISCHE PATENTANMELDUNG

(21) Anmeldenummer: **91115335.1**

(22) Anmeldetag: **11.09.91**

(51) Int. Cl.5: **B29B 17/00**, B29B 13/10, B29B 13/02, //B29K75:00

(30) Priorität: **13.09.90 DE 4029005**

(43) Veröffentlichungstag der Anmeldung: **18.03.92 Patentblatt 92/12**

(84) Benannte Vertragsstaaten: **AT BE CH DE ES FR GB IT LI NL SE**

(71) Anmelder: **PHOENIX AKTIENGESELLSCHAFT Hannoversche Strasse 88 W-2100 Hamburg 90(DE)**

(72) Erfinder: **Schaper, Herbert Hagedornstrasse 22 W-2000 Hamburg 13(DE)** Erfinder: **Leitner, Horst Buchholzer Weg 9c W-2100 Hamburg 90(DE)**

(54) Verfahren zur Wiederverwertung von Abfällen oder Altartikeln aus Kunststoff, insbesondere vernetztem Kunststoff.

(57) Die Erfindung betrifft ein Verfahren zur Wiederverwertung von Abfällen oder Altartikeln aus Kunststoff, insbesondere vernetztem Kunststoff, insbesondere aus Polyurethan oder Polyharnstoff, unter Ausübung folgender Verfahrensstufen:

a) die Abfälle bzw. Altartikel als Rohstoff werden zerkleinert, insbesondere zu Granulat, wobei die Größe des zerkleinerten Rohstoffes ≦ 4 mm, insbesondere ≦ 0,7 mm, beträgt;

b) der zerkleinerte Rohstoff wird mit Thermoplast-Granulat mechanisch vermischt;

c) das Rohstoff-Thermoplast-Gemisch wird im Spritzgußverfahren zum Artikel verspritzt.

EP 0 475 377 A2

Die Erfindung betrifft ein Verfahren zur Wiederverwertung (Recycling-Verfahren) von Abfällen oder Altartikeln aus Kunststoff, insbesondere vernetztem Kunststoff, insbesondere aus Polyurethan oder Polyharnstoff.

Bei der massenweisen Herstellung von Kleinteilen aus Kunststoff (z.B. Schaltergehäuse) fällt bei der Herstellung ein nicht unerheblicher Teil an Kunststoffabfällen an, der einen wertvollen Rohstoff darstellt. Dieser Rohstoff wurde bisher als Abfall betrachtet und entweder als Müll deponiert oder verbrannt.

Aus der EP-A-0 248 239 ist ein Verfahren zum Herstellen von Formteilen aus thermoplastischen Kunststoffabfällen bekannt, bei der die Kunststoffabfälle im Walzenextruder auf einen Druck von bis zu etwa 140 bar gebracht werden, wobei die vor der Extruderdüse liegende Form mit den plastifizierten Kunststoffabfällen unter dem Druck des Extruders gefüllt wird.

Auch bei der Herstellung von Artikeln aus Gummi (Elastomer) wie Dichtungsprofile, Krümmer-Schläuche usw. fallen beachtliche Abfallmengen an, wobei in der DE-A-37 19 291 und EP-A-0 393 535 ein Verfahren zur Wiederverwertung von Gummiabfällen beschrieben wird.

In zunehmendem Maße werden aber auch große Teile eines Kraftfahrzeuges, beispielsweise Stoßfänger, Seitenverkleidungen und Spoiler anstelle aus Metall aus Kunststoffen hergestellt, wobei Polyurethan-Integralschaum bzw. Polyurethan-RIM-Werkstoffen eine besondere Bedeutung zukommt. Diese Großteile aus Kunststoff im Kraftfahrzeugbereich, aber auch aus anderen Herstellungsbereichen anderer Gegenstände, stellen ein erhebliches Entsorgungsproblem dar (ADAC Motorwelt, Dezember 1990).

Aufgabe der Erfindung ist es daher, Abfälle wie auch Altartikel aus Kunststoff, insbesondere vernetztem Kunststoff, insbesondere aus Polyurethan oder Polyharnstoff, aus umwelttechnologischen wie auch wirtschaftlichen Gesichtspunkten einer Wiederverwertung zuzuführen. Gelöst wird diese Aufgabe durch ein Verfahren gemäß Kennzeichen des Anspruchs 1. Die erfindungswesentlichen Verfahrensstufen sind:

## Verfahrensstufe a

Zunächst werden die Abfälle bzw. Altartikel zerkleinert, insbesondere zu Granulat, wobei die Größe des zerkleinerten Rohstoffes ≤ 4 mm, insbesondere ≤ 0,7 mm (gegebenenfalls ≤ 0,2 mm>, beträgt. Dabei sollte der untere Grenzwert 0,01 mm sein.

Die Zerkleinerung des Rohstoffes erfolgt zweckmäßigerweise in einer Prallmühle. Auf die Bedeutung dieser Zerkleinerungsvorrichtung wird im Rahmen der Beschreibung der Verfahrensstufe b noch näher eingegangen.

Zwecks Entfernung eventuell störender Partikel wie Lackteile, Staub und Verstärkungsfasern (Glas oder Kohlefasern) ist es zweckmäßig, wenn der zerkleinerte Rohstoff einem Trennverfahren durch Windsichten und/oder Sieben unterworfen wird.

## Verfahrenstufe b

Der zerkleinerte Rohstoff wird mit Thermoplast-Granulat mechanisch vermischt, wobei als thermoplastischer Werkstoff insbesondere Polypropylen (PP) in reiner Form (z.B. Stamylan P von DSM, J 6100 von Shell), als Copolymer (Kelburon von DSM) oder als Blend (Keltan TP von DSM, Hostalen von Hoechst) Verwendung findet. Weitere Werkstoffe sind: Polyethylen (PE), Polycarbonat (PC), Polyetherester, Polyamid (PA) oder Polyacrylnitril-Butadien-Styrol (ABS). Die handelsübliche Granulatgröße beträgt 2 bis 5 mm. Neben den käuflichen Thermoplast-Granulaten können auch Thermoplast-Recyclate in Granulatform eingesetzt werden.

Das Mischungsverhältnis von Rohstoff zu Thermoplast als Bindemittel beträgt 80 : 20 bis 1 : 99 (zweckmäßigerweise 70 : 30 bis 10 : 90). Zwecks Haftverbesserung wird das Rohstoff-Thermoplast-Gemisch mit Additiven versetzt, wobei der Anteil dieser Additive ≤ 10 Gew.-% (bezogen auf die Gesamtmasse) ist. Es ist "Handvermischung" möglich. Bevorzugt wird jedoch der Einsatz von Mischextrudern mit anschließender Zerkleinerung auf die übliche Granulatgröße von 2 bis 5 mm, wobei dann dieses Granulat Ausgangsrohstoff für die Herstellung des Artikels im Spritzgußverfahren ist. Der Vermischung im Extruder kann eine "Handvermischung" vorausgehen. Auch das Einbringen getrennter Materialströme in den Mischextruder ist möglich.

Wird beispielsweise das polare Polyurethan (PU) mit dem nichtpolaren Polypropylen (PP) vermischt, so wäre an sich zu erwarten, daß sich die beiden Werkstoffe im Rahmen des Spritzgußverfahrens nicht verbinden. Überraschenderweise erhält man auch ohne Einsatz von Additiven eine gute Bindung zwischen PU und PP, wenn der Rohstoff PU in einer Prallmühle zerkleinert wird, was vermutlich auf die mit dieser Zerkleinerungsvorrichtung erzielte zerrissene Oberfläche der Granulatpartikel zurückzuführen ist.

2

Verfahrensstufe c

Das Rohstoff-Thermoplast-Gemisch wird im Spritzgußverfahren mittels einer üblichen Standardschnekke oder einer Mischschnecke (Ausführungsform: Krauss-Maffei) verspritzt.

Im Rahmen einer Versuchsreihe werden nun die mechanischtechnologischen Daten von Spritzgußteilen, die aus verschiedenen Polyurethan-Polypropylen-Gemischen mittels einer üblichen Standardschnecke hergestellt wurden, miteinander verglichen (Tabelle). Dabei zeigen die Versuchsreihen 3 bis 5 auf, daß selbst bei einem hohen Anteil von Polyurethan im Endartikel und gleichzeitigem Verzicht von Additiven gute Daten, z.B. in der Bruchdehnung, erzielt werden.

Nach dem erfindungsgemäßen Verfahren können aus Abfällen oder Altartikeln aus vernetztem Kunststoff insbesondere folgende Artikel hergestellt werden:

- Kfz-Teile im Nichtsichtbereich, z.B. Steinschlagschutz-Abdeckungen, Schmutzabweiser, Kotflügelauskleidungen, Handschuhkästen, Deckel für Sicherungskästen, Fußstützen, Luftleitteile, Fußraumabdeckkungen, Rücklichtverkleidungen, Deckel für Karosserieelemente, Verkleidungen für die Zentralelektrik, Wasserablauf, Reserveradabdeckung usw.;
- Teile im Nichtsichtbereich innerhalb des Maschinensektors;
- Teile im Sichtbereich innerhalb des Kfz- und Maschinensektors bei entsprechend strukturierter Lackierung.

| Daten (→) / Versuch Nr. (↓) | 1 i) | 2 i) | 3 ii) | 4 ii) | 5 ii) |
|---|---|---|---|---|---|
| **Versuchsbedingungen:** | | | | | |
| Korngröße des PU-Mahlgutes [mm] iii) | ≤0,6 | (bei sämtlichen Versuchen) | | | |
| PP-Typ | iv) | iv) | v) | vi) | vii) |
| Anteil PU/PP | 25/75 | 30/70 | 50/50 | 50/50 | 50/50 |
| Additive | viii) | viii) | - | - | - |
| **mechanische Daten:** | | | | | |
| Biege-E-Modul [kN/mm²] | 536 | 536 | 225 | 547 | 266 |
| Dichte [g/cm³] | 0,96 | 0,98 | 1,02 | 1,01 | 1,04 |
| Zugfestigkeit [N/mm²] | 11 | 10 | 5 | 9 | 6 |
| Bruchdehnung [%] | 180 | 90 | 60 | 90 | 33 |
| Schlagzähigkeit [kJ/m²] nach Dynstat RT | "kein Bruch" | (bei sämtlichen Versuchen) | | | |
| - 25°C | 7,7 | 7,2 | 4,0 | 3,0 | 2,6 |
| Sagtest [mm] bei 120°C | 9,8 | 15,7 | 22,7 | 2,3 | 17,4 |
| 160°C | 23,7 | 29,1 | 56,6 | 29,9 | 33,6 |

i) Vermischung im Extruder mit vorheriger "Handvermischung"
ii) "Handvermischung"
iii) Zerkleinerung mittels Prallmühle
iv) J 6100 (Shell)
v) Keltan TP 0550 (DSM)
vi) Stamylan 83 MF10 (DSM)
vii) Hostalen 8018A (Hoechst)
viii) gemäß Anspruch 9

## Patentansprüche

1. Verfahren zur Wiederverwertung von Abfällen oder Altartikeln aus Kunststoff, insbesondere vernetztem Kunststoff, insbesondere aus Polyurethan oder Polyharnstoff, gekennzeichnet durch folgende Verfah-

4

rensstufen:

a) die Abfälle bzw. Altartikel als Rohstoff werden zerkleinert, insbesondere zu Granulat, wobei die Größe des zerkleinerten Rohstoffes ≤ 4 mm, insbesondere ≤ 0,7 mm, beträgt;

b) der zerkleinerte Rohstoff wird mit Thermoplast-Granulat mechanisch vermischt;

c) das Rohstoff-Thermoplast-Gemisch wird im Spritzgußverfahren zum Artikel verspritzt.

2. Verfahren nach Anspruch 1, dadurch gekennzeichnet, daß die Mindestgröße des zerkleinerten Rohstoffes 0,01 mm beträgt.

3. Verfahren nach Anspruch 1 oder 2, dadurch gekennzeichnet, daß die Zerkleinerung des Rohstoffes in einer Prallmühle erfolgt.

4. Verfahren nach einem der Ansprüche 1 bis 3, dadurch gekennzeichnet, daß der zerkleinerte Rohstoff zwecks Entfernung eventuell störender Partikel (z.B. Lackteile, Staub, Verstärkungsfasern) einem Trennverfahren durch Windsichten und/oder Sieben unterworfen wird.

5. Verfahren nach einem der Ansprüche 1 bis 4, dadurch gekennzeichnet, daß der Thermoplast aus Polyethylen (PE), Polycarbonat (PC), Polyethylen-Vinylacetat (EVA), Polyetherester, Polyamid (PA), Polyacrylnitril-Butadien-Styrol (ABS), insbesondere aus Polypropylen (PP) in reiner Form, als Copolymer oder als Blend, besteht.

6. Verfahren nach einem der Ansprüche 1 bis 5, dadurch gekennzeichnet, daß das Mischungsverhältnis von Rohstoff zu Thermoplast

   80 :           20 bis 1 : 90
   (insbesondere 70 :    30 bis 10 : 90)
   beträgt.

7. Verfahren nach einem der Ansprüche 1 bis 6, dadurch gekennzeichnet, daß das Rohstoff-Thermoplast-Gemisch zur Haftverbesserung mit Additiven versetzt wird.

8. Verfahren nach Anspruch 7, dadurch gekennzeichnet, daß der Anteil der Additive ≤ 10 Gew.-% (bezogen auf die Gesamtmasse) beträgt.

9. Verfahren nach einem der Ansprüche 1 bis 8, dadurch gekennzeichnet, daß zwecks Mischungsoptimierung der zerkleinerte Rohstoff in einem Extruder mit dem Thermoplast-Granulat mechanisch vermischt wird, wobei das Rohstoff-Thermoplast-Gemisch anschließend granuliert wird.

10. Wiederverwertung von Abfällen oder Altartiklen aus Kunststoff, insbesondere vernetztem Kunststoff, insbesondere aus Polyurethan oder Polyharnstoff, unter Ausübung des Verfahrens nach einem der Ansprüche 1 bis 9 zur Herstellung von Artikeln im Nichtsichtbereich innerhalb des Kfz- und Maschinensektors.

11. Wiederverwertung von Abfällen oder Altartikeln aus Kunststoff, insbesondere vernetztem Kunststoff, insbesondere aus Polyurethan oder Polyharnstoff, unter Ausübung des Verfahrens nach einem der Ansprüche 1 bis 9 zur Herstellung von Artikeln im Sichtbereich innerhalb des Kfz- und Maschinensektors bei entsprechend strukturierter Lackierung.